# EUROPEAN PATENT SPECIFICATION

(11) **EP 3 666 861 B1**
(45) Date of publication and mention of the grant of the patent: **02.10.2024**
(21) Application number: 18845098.5
(22) Date of filing: 03.08.2018
(51) Int. Cl.: C10M 129/18, C10M 171/00, C09K 5/00, C09K 5/04, C10N 20/00, C10N 30/00, C10N 40/30, C10N 30/10

(54) **REFRIGERATOR OIL COMPOSITION**
KÄLTEMASCHINENÖLZUSAMMENSETZUNG
COMPOSITION D'HUILE POUR RÉFRIGÉRATEUR

(30) Priority: 08.08.2017 JP 2017153712
(43) Date of publication of application: 17.06.2020
(73) Proprietor: Idemitsu Kosan Co., Ltd., Chiyoda-ku Tokyo 100-8321 (JP)
(72) Inventor: NAKAJIMA, So, Ichihara-shi Chiba 299-0107 (JP); USHIYAMA, Tomoya, Ichihara-shi Chiba 299-0107 (JP)
(74) Representative: Hoffmann Eitle
(86) International application number: PCT/JP2018/029192
(87) International publication number: WO 2019/031402

(56) References cited:
- EP-A2- 0 568 038
- EP-A2- 0 612 835
- WO-A1-2013/138123
- JP-A- 2007 532 766
- JP-A- 2011 046 883
- JP-A- 2012 007 179
- JP-A- 2015 514 827
- JP-A- 2017 101 215
- JP-A- 2017 125 216
- JP-A- H04 314 796
- JP-A- H06 240 279
- JP-A- H06 240 279
- JP-A- S5 566 997
- JP-A- S50 134 990

## Description

### Technical Field

The present invention relates to a refrigerant-mixed refrigerator oil composition.

### Background Art

In general, a compression refrigerator is constituted by at least a compressor, a condenser, an expansion mechanism (such as an expansion valve), an evaporator, and the like, and has such a structure that a mixture of a refrigerant and a refrigerator oil is circulated in a closed system.

As a refrigerant used for a compression refrigerator, a fluorinated hydrocarbon compound having a low environmental load is becoming to be used instead of a hydrochlorofluorocarbon (HCFC) having been frequently used.

As the fluorinated hydrocarbon compound, a saturated fluorinated hydrocarbon compound (hydro-fluoro-carbon, which may be hereinafter referred to as "HFC"), such as 1,1,1,2-tetrafluoroethane (R134a), difluoromethane (R32), and a mixture of difluoromethane and pentafluoroethane (R410A), is frequently used.

In recent years, the use of an unsaturated fluorinated hydrocarbon compound (hydro-fluoro-olefin, which may be hereinafter referred to as "HFO"), such as 1,3,3,3-tetrafluoropropene (R1234ze and 2,3,3,3-tetrafluoropropene (R1234yf), having a low global warming potential is started to be considered.

For example, PTL 1 describes that a refrigerator oil composition containing a base oil containing an ether based compound, and an alicyclic epoxy compound, such as 1,2-epoxycyclohexane, and having a water content of 300 to 10,000 ppm by mass can achieve both the stability and the abrasion resistance in a high level under an HFO refrigerant.
PTL2 relates to a lubricating oil composition in which a lubricating oil base contains 0.1% by weight to 20% by weight of an aromatic glycidyl carboxylate having a general formula and/or 0.05% by weight to 10% by weight of a phosphonate type additive having a general formula and which has stability to hydrolysis, heat and oxidation as well as in lubricating properties, and so provides a refrigerating oil composition.
PTL3 relates to a lubricant composition for a refrigerator which is made by: blending an ester-based or ether-based synthetic lubricating base oil with 0.01 wt.% to less than 1 wt.% of one kind or more compounds containing cyclohexene oxide in the molecule and 0.01 wt.% to less than 1 wt.% of one kind or more diphenylcarbodiimide or bis(alkylphenyl)carbodiimide compounds; and using hydrofluorocarbons, carbon dioxide or hydrocarbons as the refrigerant.
PTL4 relates to a refrigerating machine oil composition which comprises a base oil such as polyglycol, polyvinyl ether or the like which base oil is blended with an epoxy compound represented by a general formula. Said composition has stability, sludge preventive properties, copper-plating preventive properties, etc. and may be effective for use in an automobile air conditioner, a room air conditioner, a refrigerator, etc., thereby making itself valuable from the viewpoint of industrial utilization.
PTL5 relates to a composition which is prepared by adding at least one epoxy compound selected from the group consisting of D-limonene oxide, L-limonene oxide, alpha-pinene oxide and L-carbonoxide to a base oil such as polyglycol or polyvinyl ether.

### Citation List

### Patent Literature

PTL 1: JP 2011-046883 A
PTL2 : EP0568038A3
PTL3 : JP2012007179A
PTL4 : EP0612835A3
PTL5 :JPH06240279A1

### Summary of Invention

### Technical Problem

In recent years, a refrigerator is undergoing reduction in size, enhancement of capability, and the like, and the operation condition thereof is becoming severer than ever. Accordingly, a refrigerator oil composition is demanded to have higher quality than ever. For example, the amount of the refrigerator oil composition used in the refrigerator is being decreased along with the reduction in size of the refrigerator, and simultaneously a portion becoming a high temperature locally may occur due to the frictional heat and the like in the sliding part of the compressor caused by the operation condition becoming severer. In the case where the refrigerator oil composition mixed with a refrigerant is exposed to such a portion, there may be a situation that the acid value of the refrigerator oil composition tends to increase.

Furthermore, in the case where an HFO refrigerant or the like having low thermal stability at a high temperature is used, the acid value of the refrigerator oil composition particularly tends to increase.

Accordingly, the refrigerator oil composition is demanded to suppress the increase of the acid value effectively, and to achieve further excellent oxidation stability at a high temperature.

However, according to the investigations by the present inventors, the refrigerator oil composition described in PTL 1 cannot sufficiently suppress the increase of the acid value, and cannot have sufficient oxidation stability at a high temperature.

An object of the present invention is to provide a refrigerator oil composition that can effectively suppress the increase of the acid value, and is excellent in oxidation stability at a high temperature.

### Solution to Problem

The present inventors have found that a refrigerator oil composition containing a base oil and an epoxy compound having a particular skeleton can solve the problem, and thus have completed the present invention.

Specifically, the present invention relates to a refrigerant mixed refrigerator oil composition as defined in the claims, and the use thereof.

### Advantageous Effects of Invention

The refrigerator oil composition of the present invention can effectively suppress the increase of the acid value, and is excellent in oxidation stability at a high temperature.

### Description of Embodiments

In the description herein, the "hydrocarbon group" means a group that is constituted only by a carbon atom and a hydrogen atom, unless otherwise indicated. The "hydrocarbon group" includes an "aliphatic group" constituted by a linear chain or a branched chain, an "alicyclic group" having one or more saturated or unsaturated carbon ring having no aromaticity, and an "aromatic group" having one or more aromatic ring exhibiting aromaticity, such as a benzene ring.

In the description herein, the "number of ring carbon atoms" of a compound having a structure containing atoms bonded to form a ring means the number of carbon atoms in the atoms constituting the ring itself. In the case where the ring is substituted by a substituent, carbon contained in the substituent is not included in the number of ring carbon atoms.

The number of ring atoms of a compound having a structure containing atoms bonded to form a ring means the number of atoms constituting the ring itself. The atom that does not constitute the ring (such as a hydrogen atom terminating the bond of the atom constituting the ring) and the atom that is contained in the substituent in the case where the ring is substituted by the substituent are not included in the number of ring atoms.

### [Embodiments of Refrigerator Oil Composition of Present Invention]

The refrigerator oil composition of the present invention contains an epoxy compound (X) having an olefin skeleton according to claim 1, and a base oil (Y).

In the description herein, a composition that contains an epoxy compound (X) having an olefin skeleton according to claim 1, and a base oil (Y), but does not contain a refrigerant is referred to as a "refrigerator oil composition". A composition that contains the "refrigerator oil composition" and a "refrigerant" mixed therewith is referred to as a "refrigerant-mixed refrigerator oil composition".

The present inventors have made investigations on the effect of suppressing the increase of the acid value of the refrigerator oil composition with various stabilizers, taking an HFO refrigerant as an example of the refrigerant having low thermal stability at high temperature and being liable to form an acidic substance and the like which become a factor of increase of the acid value. As a result, it has been found that an epoxy compound (X) having at least one of an olefin skeleton and a terpene skeleton exhibits a significant effect of suppressing the increase of the acid value.

On the other hand, the use of an epoxy compound that does not have any of an olefin skeleton and a terpene skeleton cannot provide a sufficient effect of suppressing the increase of the acid value, and the use of an olefin based compound that does not have an epoxy skeleton and the use of a terpene based compound that does not have an epoxy skeleton cannot provide a sufficient effect of suppressing the increase of the acid value.

The present inventors have found therefrom that a compound having an olefin skeleton and an epoxy skeleton in one molecule or a compound having a terpene skeleton and an epoxy skeleton in one molecule exhibits a significant effect on the suppression of increase of the acid value of the refrigerator oil composition, and thus have completed the present invention.

The refrigerator oil composition of one embodiment of the present invention may contain a general purpose additive other than the components (X) and (Y) in such a range that does not impair the effects of the present invention.

In the refrigerator oil composition, the total content of the components (X) and (Y) is preferably 80 to 100% by mass, more preferably 85 to 100% by mass, further preferably 90 to 100% by mass, and still further preferably 95 to 100% by mass, based on the total amount (100% by mass) of the refrigerator oil composition.

In the refrigerator oil composition of one embodiment of the present invention, the content of an epoxy compound that does not have any of an olefin skeleton and a terpene skeleton is preferably small. Specifically, the content thereof is preferably less than 10 parts by mass, more preferably less than 5 parts by mass, further preferably less than 1 part by mass, still further preferably less than 0.5 part by mass, and still more further preferably less than 0.1 part by mass, per 100 parts by mass of the component (X).

The components blended in the refrigerator oil composition will be described below.

### [Epoxy Compound (X)]

The refrigerator oil composition contains the epoxy compound (X) having an olefin skeleton as further described in claim 1.

In the description herein, the "olefin skeleton" means an aliphatic or alicyclic unsaturated hydrocarbon having a double bond, and does not encompass an aromatic group.

In the refrigerator oil composition of one embodiment of the present invention, the content of the epoxy compound (X) is preferably 0.3% by mass or more, more preferably 0.5% by mass or more, further preferably 1.0% by mass or more, still further preferably 1.2% by mass or more, and still more further preferably 1.6% by mass or more, based on the total amount (100% by mass) of the refrigerator oil composition, from the standpoint of the achievement of the excellent effect of suppressing the increase of the acid value. The content thereof is preferably 5.0% by mass or less, more preferably 4.0% by mass or less, further preferably 3.0% by mass or less, and still further preferably 2.0% by mass or less, from the standpoint of the exhibition of the sufficient effect of suppressing the increase of the acid value with a small content of the epoxy compound (X).

The epoxy compound (X) is a compound that has an olefin skeleton, and has one or more epoxy skeleton, in one molecule.

The epoxy compound (X) may be used alone or as a combination of two or more kinds thereof.

In the epoxy compound (X), the number of carbon atoms of the epoxy compound (X) is preferably 4 to 16, more preferably 4 to 14, further preferably 4 to 12, and still further preferably 6 to 10, from the standpoint of the achievement of the further excellent effect of suppressing the increase of the acid value.

The epoxy compound (X) preferably has one epoxy skeleton from the standpoint of the achievement of the further excellent effect of suppressing the increase of the acid value.

The epoxy compound (X) is preferably one or more kind selected from an epoxy compound (X1) having at least an olefin skeleton and an epoxy compound (X2) having at least a terpene skeleton from the standpoint of the achievement of the further excellent effect of suppressing the increase of the acid value. The epoxy compound (X1) having at least an olefin skeleton is preferably one or more kind selected from an alicyclic epoxy compound (X1A) having at least an olefin skeleton and an aliphatic epoxy compound (X1B) having at least an olefin skeleton, and more preferably an alicyclic epoxy compound (X1A) having at least an olefin skeleton, from the standpoint of the achievement of the further excellent effect of suppressing the increase of the acid value.

The epoxy compound (X) will be described in more detail below.

### <Epoxy Compound (X1) having at least Olefin Skeleton>

The epoxy compound (X1) having at least an olefin skeleton may be an epoxy compound that has one or more olefin skeleton, and may have a skeleton other than an olefin skeleton in such a range that does not impair the effects of the present invention.

### (Alicyclic Epoxy Compound (X1A) having at least Olefin Skeleton)

The alicyclic epoxy compound (X1A) having at least an olefin skeleton is a compound that has a substituent R¹ containing an olefin skeleton, and an alicyclic ring having incorporated therein carbon atoms constituting an epoxy group, as represented by the following general formula (1).

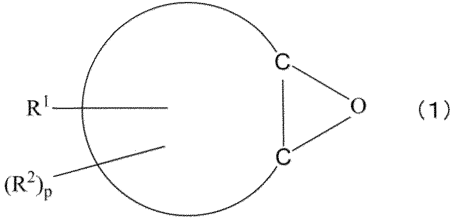

In the general formula (1), an alicyclic ring shown by the approximate circle is a cycloalkane skeleton having 5 to 12 ring carbon atoms or a cycloalkene skeleton having 5 to 12 ring carbon atoms.

The alicyclic ring is preferably a cycloalkane skeleton having 5 to 10 ring carbon atoms or a cycloalkene skeleton having 5 to 10 ring carbon atoms, more preferably a cycloalkane skeleton having 5 to 8 ring carbon atoms or a cycloalkene skeleton having 5 to 8 ring carbon atoms, further preferably a cyclohexane skeleton or a cyclohexene skeleton, and still further preferably a cyclohexane skeleton, from the standpoint of the achievement of the further excellent effect of suppressing the increase of the acid value.

In the general formula (1), R¹ represents an aliphatic hydrocarbon group having a linear or branched olefin structure having 2 to 10 carbon atoms, and examples thereof include a vinyl group, an allyl group, a butenyl group, a pentenyl group, a hexenyl group, a heptenyl group, a 1-methyl-2-butenyl group, a 1-methyl-3-butenyl group, a 1,2-dimethyl-3-pentenyl group, and a 1,2-dimethyl-4-pentenyl group.

The aliphatic hydrocarbon group may have one or more ether bond.

The aliphatic hydrocarbon group may be an aliphatic hydrocarbon group having a substituent or an aliphatic hydrocarbon group having no substituent, and is preferably an aliphatic hydrocarbon group having no substituent.

In the case where the aliphatic hydrocarbon group has a substituent, examples of the substituent include a halogen atom, a hydroxy group, an alkoxy group, an amino group, an imino group, an amide group, and a carboxy group. In the case where the aliphatic hydrocarbon group has plural substituents, the plural substituents may be the same as or different from each other.

R¹ preferably represents an aliphatic hydrocarbon group having a linear olefin structure, and more preferably an aliphatic hydrocarbon group having a linear α-olefin structure, from the standpoint of the achievement of the further excellent effect of suppressing the increase of the acid value.

R¹ preferably has 2 to 6 carbon atoms, and more preferably has 2 to 3 carbon atoms, from the standpoint of the achievement of the further excellent effect of suppressing the increase of the acid value.

Accordingly, examples of the aliphatic hydrocarbon group in the alicyclic epoxy compound (X1A) include a vinyl group, an allyl group, a 3-butenyl group, a 4-pentenyl group, and a 5-hexenyl group, and a vinyl group or an allyl group is preferable, and a vinyl group is more preferable.

In the general formula (1), R² represents an alkyl group having 1 to 3 carbon atoms, a halogen atom, a hydroxy group, an alkoxy group, an amino group, an imino group, an amide group, and a carboxy group.
p represents an integer of 0 or more. In the case where p is 2 or more, plural groups represented by R² may be the same as or different from each other. p is preferably 0. Accordingly, the alicyclic ring in the general formula (1) is preferably an alicyclic ring that does not have a substituent other than the R¹ group.

Apart from the alicyclic epoxy compound (X1A) the composition may comprise further alicyclic epoxy compounds having at least an olefin skeleton may be a compound represented by the following general formula (1a).

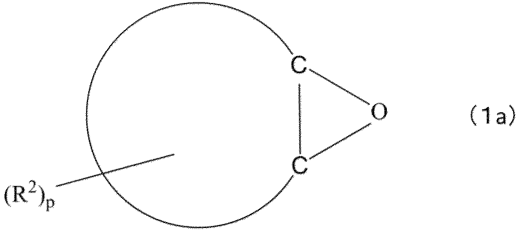

In the general formula (1a), an alicyclic ring shown by the approximate circle is a cycloalkene skeleton having 5 to 12 ring carbon atoms.

The alicyclic ring is preferably a cycloalkene skeleton having 5 to 10 ring carbon atoms, more preferably a cycloalkene skeleton having 5 to 8 ring carbon atoms, and further preferably a cyclohexene ring, from the standpoint of the achievement of the further excellent effect of suppressing the increase of the acid value.

In the general formula (1a), R² and p are the same as in the general formula (1), and p is preferably 0. Accordingly, the alicyclic ring in the general formula (1a) is preferably an alicyclic ring having no substituent.

### (Aliphatic Epoxy Compound (X1B) having at least Olefin Skeleton)

The aliphatic epoxy compound (X1B) having at least an olefin skeleton may be a compound that has a substituent R³ containing an olefin skeleton, and an epoxy group in one molecule, as represented by the following general formula (2).

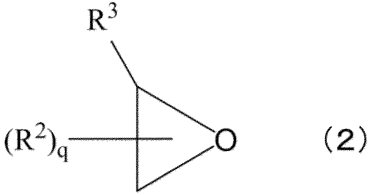

In the general formula (2), R³ represents an aliphatic hydrocarbon group having a linear or branched olefin structure having 2 to 14 carbon atoms, and examples thereof include the same groups as for R¹.

The aliphatic hydrocarbon group may be an aliphatic hydrocarbon group having a substituent or an aliphatic hydrocarbon group having no substituent, and is preferably an aliphatic hydrocarbon group having no substituent.

In the case where the aliphatic hydrocarbon group has a substituent, the substituent may be the substituents described for R¹ above. In the case where the aliphatic hydrocarbon group has plural substituents, the plural substituents may be the same as or different from each other.

In the general formula (2), R² has the same meaning as in the general formula (1). q represents an integer of 0 to 3. In the case where q is 2 to 3, plural groups represented by R² may be the same as or different from each other. q is preferably 0. Accordingly, the epoxy group in the general formula (2) is preferably an epoxy group that does not have a substituent other than the R³ group.

R³ preferably represents an aliphatic hydrocarbon group having a linear olefin structure, and more preferably an aliphatic hydrocarbon group having a linear α-olefin structure, from the standpoint of the achievement of the further excellent effect of suppressing the increase of the acid value.

R³ preferably has 2 to 10 carbon atoms, more preferably has 3 to 6 carbon atoms, and further preferably has 3 to 4 carbon atoms, from the standpoint of the achievement of the further excellent effect of suppressing the increase of the acid value.

Accordingly, R³ preferably represents a vinyl group, an allyl group, a 3-butenyl group, a 4-pentenyl group, or a 5-hexenyl group, more preferably an allyl group or a 3-butenyl group, and further preferably an allyl group.

In the aliphatic epoxy compound (X1B) represented by the general formula (2), R³ may have an ether bond, which may be, for example, an aliphatic epoxy compound represented by the general formula (2a).

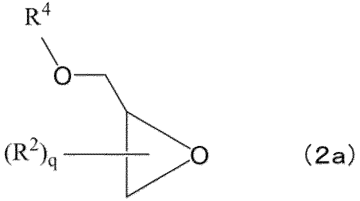

In the general formula (2a), R⁴ represents an aliphatic hydrocarbon group having a linear or branched olefin structure having 2 to 13 carbon atoms, and examples thereof include the same groups as for R¹.

In the general formula (2a), R² and q are the same as in the general formula (2). q represents an integer of 0 to 3. In the case where q is 2 to 3, plural groups represented by R² may be the same as or different from each other. q is preferably 0. Accordingly, the epoxy group in the general formula (2a) is preferably an epoxy group that does not have a substituent other than the R⁴-O-CH₂- group.

R⁴ preferably represents an aliphatic hydrocarbon group having a linear olefin structure, and more preferably an aliphatic hydrocarbon group having a linear α-olefin structure, as similar to R³, from the standpoint of the achievement of the further excellent effect of suppressing the increase of the acid value.

R⁴ preferably has 2 to 10 carbon atoms, more preferably has 3 to 6 carbon atoms, and further preferably has 3 to 4 carbon atoms, from the standpoint of the achievement of the further excellent effect of suppressing the increase of the acid value.

Accordingly, R⁴ preferably represents a vinyl group, an allyl group, a 3-butenyl group, a 4-pentenyl group, or a 5-hexenyl group, more preferably an allyl group or a 3-butenyl group, and further preferably an allyl group.

### <Epoxy Compound (X2) having at least Terpene Skeleton>

The epoxy compound (X2) having at least a terpene skeleton may be an epoxy compound that has one or more terpene skeleton, and may have a skeleton other than a terpene skeleton in such a range that does not impair the effects of the present invention.

### (Epoxy Compound (X2) having at least Terpene Skeleton)

The epoxy compound (X2) having at least a terpene skeleton may be a compound that has a terpene skeleton and an epoxy group in one molecule.

In one embodiment of the refrigerator oil composition of the present invention, the epoxy compound (X2) having at least a terpene skeleton is preferably a compound obtained through epoxidization of the double bond moiety of a bicyclic monoterpene, which is a dimer of isoprene, or a polycyclic sesquiterpene, which is a trimer of isoprene, and preferably a compound obtained through epoxidization of the double bond moiety of a bicyclic monoterpene. Specifically, preferred examples thereof include α-pinene oxide, 3-carene oxide, and camphene oxide, which each are a compound obtained through epoxidization of the double bond moiety of α-pinene, carene, camphene, or the like, which is a bicyclic monoterpene having a double bond, and among these, α-pinene oxide is particularly preferred.

In one embodiment of the refrigerator oil composition of the present invention, the epoxy compound (X2) is preferably a compound obtained by bonding a bicyclic monoterpene, which is a dimer of isoprene, or a polycyclic sesquiterpene, which is a trimer of isoprene, and an epoxy group through a linker, and more preferably a compound obtained by bonding a bicyclic monoterpene and an epoxy group through a linker.

Examples of the linker include a divalent aliphatic hydrocarbon group having 1 to 4 carbon atoms, such as a methylene group, an ethylene group, a n-propylene group, and a n-butylene group.

Examples of the bicyclic monoterpene include pinane, carane, and isocamphane, and pinane is preferred. The bicyclic monoterpene may have a double bond. Accordingly, α-pinene, β-pinene, carene, camphene, and the like may be used.

### [Base Oil (Y)]

The refrigerator oil composition of the present invention contains the base oil (Y).

In the refrigerator oil composition of one embodiment of the present invention, the content of the base oil (Y) is preferably 85% by mass or more, more preferably 90% by mass or more, and further preferably 95% by mass or more, based on the total amount (100% by mass) of the refrigerator oil composition. The content thereof is preferably 99.7% by mass or less, more preferably 99% by mass or less, and further preferably 98% by mass or less.

The base oil (Y) used may be at least one kind selected from a synthetic oil and a mineral oil that have been used for the purpose of a refrigerator oil.

In the refrigerator oil composition of one embodiment of the present invention, the base oil (Y) preferably contains one or more kind of a base oil (Y1) selected from a polyvinyl ether compound (PVE), a polyalkylene glycol compound (PAG), a polyol ester compound (POE), and a mineral oil from the standpoint of the enhancement of the thermal stability of the refrigerator oil composition, and more preferably contains, in the base oil (Y1), one or more kind selected from a polyvinyl ether compound (PVE) and a polyalkylene glycol compound (PAG) from the standpoint of the enhancement of the compatibility with a refrigerant, the standpoint of the enhancement of the hydrolysis resistance, and the standpoint of the enhancement of the thermal stability of the refrigerator oil composition.

The base oil further preferably contains a polyalkylene glycol compound (PAG) from the standpoint of the enhancement of the compatibility with a refrigerant, the standpoint of the enhancement of the hydrolysis resistance, and the standpoint of the further enhancement of the thermal stability of the refrigerator oil composition.

The PVE, the PAG, the POE, and the mineral oil will be described in detail below.

### <Polyvinyl Ether Compound (PVE)>

It suffices that the polyvinyl ether compound (PVE) is a polymer having one or more kind of a constitutional unit derived from vinyl ether. In the case where the base oil (Y) contains the PVE, the PVE may be used alone or as a combination of two or more kinds thereof.

In the PVE, a polymer having one or more kind of a constitutional unit derived from vinyl ether, and having an alkyl group having 1 to 4 carbon atoms on the side chain is preferred from the standpoint of the compatibility with a refrigerant. The alkyl group is preferably a methyl group or an ethyl group, and more preferably a methyl group, from the standpoint of the further enhancement of the compatibility with a refrigerant.

In the PVE, a polymer (A-1) having one or more kind of a constitutional unit represented by the following general formula (A-1) is preferred.

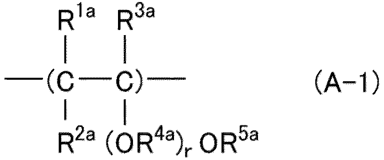

In the formula (A-1), R^{1a}, R^{2a}, and R^{3a} each independently represent a hydrogen atom or a hydrocarbon group having 1 to 8 carbon atoms. R^{4a} represents a divalent hydrocarbon group having 2 to 10 carbon atoms. R^{5a} represents a hydrocarbon group having 1 to 10 carbon atoms.
r is a number of the repeating unit of OR^{4a}, and represents a number of 0 to 10, preferably a number of 0 to 5, more preferably a number of 0 to 3, and further preferably 0.

In the case where plural groups represented by OR^{4a} exist in the repeating unit represented by the general formula (A-1), the plural groups represented by OR^{4a} may be the same as or different from each other.

Examples of the hydrocarbon group having 1 to 8 carbon atoms that can be selected as R^{1a}, R^{2a}, and R^{3a} include an alkyl group, such as a methyl group, an ethyl group, a n-propyl group, an isopropyl group, a n-butyl group, an isobutyl group, a sec-butyl group, a tert-butyl group, various pentyl groups, various hexyl groups, various heptyl groups, and various octyl groups; a cycloalkyl group, such as a cyclopentyl group, a cyclohexyl group, various methylcyclohexyl groups, various ethylcyclohexyl groups, and various dimethylcyclohexyl groups; an aryl group, such as a phenyl group, various methylphenyl groups, various ethylphenyl groups, and various dimethylphenyl groups; and an arylalkyl group, such as a benzyl group, various phenylethyl groups, and various methylbenzyl groups. In the description herein, the term "various" attached to the name of the hydrocarbon group means various isomers including n-, sec-, tert-, iso-, and the like.

The number of carbon atoms of the hydrocarbon group is preferably 1 to 6, and more preferably 1 to 3.

R^{1a}, R^{2a}, and R^{3a} each independently preferably represent a hydrogen atom or an alkyl group having 1 to 8 carbon atoms, and more preferably a hydrogen atom or an alkyl group having 1 to 3 carbon atoms.

R^{1a}, R^{2a}, and R^{3a} may be the same as or different from each other.

Examples of the divalent hydrocarbon group having 2 to 10 carbon atoms that can be selected as R^{4a} include a divalent aliphatic group, such as an ethylene group, a 1,2-propylene group, a 1,3-propylene group, various butylene groups, various pentylene groups, various hexylene groups, various heptylene groups, various octylene groups, various nonylene groups, and various decylene groups; a divalent alicyclic group, such as cyclohexane, methylcyclohexane, ethylcyclohexane, dimethylcyclohexane, and propylcyclohexane; a divalent aromatic group, such as various phenylene groups, various methylphenylene groups, various ethylphenylene groups, various dimethylphenylene groups, and various naphthylene; a divalent alkyl aromatic group having a monovalent bond in each of the alkyl group moiety and the aromatic moiety, such as toluene, xylene, and ethylbenzene; and a divalent alkyl aromatic group having bonds in the alkyl group moiety of a polyalkyl aromatic hydrocarbon, such as xylene and diethylbenzene.

The number of carbon atoms of the hydrocarbon group is preferably 2 to 6, and more preferably 2 to 4.

R^{4a} preferably represents a divalent aliphatic group having 2 to 10 carbon atoms, and more preferably a divalent aliphatic group having 2 to 4 carbon atoms.

Examples of the hydrocarbon group having 1 to 10 carbon atoms that can be selected as R^{5a} include an alkyl group, such as a methyl group, an ethyl group, a n-propyl group, an isopropyl group, a n-butyl group, an isobutyl group, a sec-butyl group, a tert-butyl group, various pentyl groups, various hexyl groups, various heptyl groups, various octyl groups, various nonyl groups, and various decyl groups; a cycloalkyl group, such as a cyclopentyl group, a cyclohexyl group, various methylcyclohexyl groups, various ethylcyclohexyl groups, various propylcyclohexyl groups, and various dimethylcyclohexyl groups; an aryl group, such as a phenyl group, various methylphenyl groups, various ethylphenyl groups, various dimethylphenyl groups, various propylphenyl groups, various trimethylphenyl groups, various butylphenyl groups, and various naphthyl groups; and an arylalkyl group, such as a benzyl group, various phenylethyl groups, various methylbenzyl groups, various phenylpropyl groups, and various phenylbutyl groups.

The number of carbon atoms of the hydrocarbon group that can be selected as R^{5a} is preferably 1 to 8, and more preferably 1 to 6.

R^{5a} preferably represents an alkyl group having 1 to 6 carbon atoms, more preferably an alkyl group having 1 to 4 carbon atoms, further preferably a methyl group or an ethyl group, and still further preferably a methyl group, from the standpoint of the further enhancement of the compatibility with a refrigerant.

The number of the constitutional unit represented by the general formula (A-1) (i.e., the degree of polymerization) may be appropriately selected depending on the kinetic viscosity demanded for the base oil (Y).

The polymer having the constitutional unit represented by the general formula (A-1) may be a homopolymer having only one kind of the constitutional unit or may be a copolymer having two or more kinds of the constitutional units.

In the case where the polymer is the copolymer, the mode of copolymerization is not particularly limited, and may be any of a block copolymer, a random copolymer, and a graft copolymer.

A monovalent group derived from a saturated hydrocarbon, an ether, an alcohol, a ketone, an amide, a nitrile, or the like may be introduced to the end of the polymer (A-1).

Among these, the polymer (A-1) preferably has one end thereof that is represented by the following general formula (A-1-i).

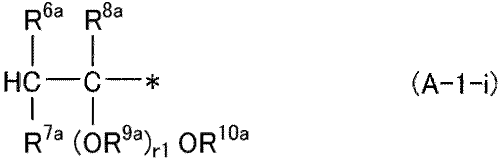

In the general formula (A-1-i), the asterisk represents the bonding position to the carbon atom in the constitutional unit represented by the general formula (A-1).

In the general formula (A-1-i), R^{6a}, R^{7a}, and R^{8a} each independently represent a hydrogen atom or a hydrocarbon group having 1 to 8 carbon atoms, preferably a hydrogen atom or a hydrocarbon group having 1 to 6 carbon atoms, and more preferably a hydrogen atom or an alkyl group having 1 to 3 carbon atoms.

R^{6a}, R^{7a}, and R^{8a} may be the same as or different from each other.

Examples of the hydrocarbon group having 1 to 8 carbon atoms that can be selected as R^{6a}, R^{7a}, and R^{8a} include the same groups as described for the hydrocarbon group having 1 to 8 carbon atoms that can be selected as R^{1a}, R^{2a}, and R^{3a} in the general formula (A-1).

In the general formula (A-1-i), R^{9a} represents a divalent hydrocarbon group having 2 to 10 carbon atoms, preferably a divalent hydrocarbon group having 2 to 6 carbon atoms, and more preferably a divalent aliphatic group having 2 to 4 carbon atoms.

r1 is a number of the repeating unit of OR^{9a}, and represents an integer of 0 to 10, preferably an integer of 0 to 5, more preferably an integer of 0 to 3, and further preferably 0.

In the case where plural groups represented by OR^{9a} exist in the repeating unit represented by the general formula (A-1-i), the plural groups represented by OR^{9a} may be the same as or different from each other.

Examples of the divalent hydrocarbon group having 2 to 10 carbon atoms that can be selected as R^{9a} include the same groups as described for the divalent hydrocarbon group having 2 to 10 carbon atoms that can be selected as R^{4a} in the general formula (A-1).

In the general formula (A-1-i), R^{10a} represents a hydrocarbon group having 1 to 10 carbon atoms, preferably a hydrocarbon group having 1 to 8 carbon atoms, and more preferably an alkyl group having 1 to 8 carbon atoms.

R^{10a} preferably represents an alkyl group having 1 to 6 carbon atoms in the case where r1 in the general formula (A-1-i) is 0, and preferably represents an alkyl group having 1 to 4 carbon atoms in the case where r1 is 1 or more.

Examples of the hydrocarbon group having 1 to 10 carbon atoms that can be selected as R^{10a} include the same groups as described for the hydrocarbon group having 1 to 10 carbon atoms that can be selected as R^{5a} in the general formula (A-1).

In the case where the polymer (A-1) has one end thereof that is represented by the general formula (A-1-i), the other end thereof is preferably any of a group represented by the general formula (A-1-i), a group represented by the following general formula (A-1-ii), a group represented by the following general formula (A-1-iii), and a group having an olefinic unsaturated bond.

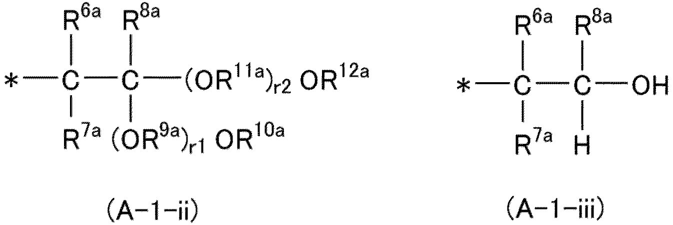

In the general formulae (A-1-ii) and (A-1-iii), R^{6a}, R^{7a}, R^{8a}, R^{9a}, R^{10a}, and r1 have the same meanings as in the general formula (A-1-i).

In the general formula (A-1-ii), R^{11a}, R^{12a}, and r2 have the same meanings of R^{9a}, R^{10a}, and r1 in the general formula (A-1-i) respectively.

### <Polyalkylene Glycol Compound (PAG)>

The polyalkylene glycol compound (PAG) is preferably a polymer (B-1) represented by the following general formula (B-1). In the case where the base oil (Y) contains the PAG, the PAG may be used alone or as a combination of two or more kinds thereof.

R^{1b}-[(OR^{2b})ₘ-OR^{3b}]ₙ (B-1)

In the formula (B-1), R^{1b} represents a hydrogen atom, a monovalent hydrocarbon group having 1 to 10 carbon atoms, an acyl group having 2 to 10 carbon atoms, a divalent to hexavalent hydrocarbon group having 1 to 10 carbon atoms, or a substituted or unsubstituted heterocyclic group having 3 to 10 ring atoms. R^{2b} represents an alkylene group having 2 to 4 carbon atoms. R^{3b} represents a hydrogen atom, a monovalent hydrocarbon group having 1 to 10 carbon atoms, an acyl group having 2 to 10 carbon atoms, or a substituted or unsubstituted heterocyclic group having 3 to 10 ring atoms.

Examples of the substituent that the heterocyclic group may have include an alkyl group having 1 to 10 (preferably 1 to 6, and more preferably 1 to 3) carbon atoms, a cycloalkyl group having 3 to 10 (preferably 3 to 8, and more preferably 5 or 6) ring carbon atoms, an aryl group having 6 to 18 (preferably 6 to 12) ring carbon atoms, a halogen atom (such as a fluorine atom, a chlorine atom, a bromine atom, and an iodine atom), a cyano group, a nitro group, a hydroxy group, and an amino group.

These substituent may be further substituted by an arbitrary one of the aforementioned substituents.

n represents an integer of 1 to 6, preferably an integer of 1 to 3, and further preferably 1.
n may be determined depending on the number of bond of R^{1b} in the general formula (B-1). For example, in the case where R^{1b} represents an alkyl group or an acyl group, n is 1, and in the case where R^{1b} represents a hydrocarbon group or a heterocyclic group, and the valence of the group is 2, 3, 4, 5, or 6, n is 2, 3, 4, 5, or 6 respectively.
m is a number of the repeating unit of OR^{2b}, and represents a number of 1 or more, and preferably a number that provides m × n of 6 to 80.

The plural groups represented by R^{2b} may be the same as or different from each other. In the case where n is 2 or more, the plural groups represented by R^{3b} in one molecule may be the same as or different from each other.

Examples of the monovalent hydrocarbon group that can be selected as R^{1b} and R^{3b} include an alkyl group, such as a methyl group, an ethyl group, a n-propyl group, an isopropyl group, a n-butyl group, an isobutyl group, a sec-butyl group, a tert-butyl group, various pentyl groups, various hexyl groups, various heptyl groups, various octyl groups, various nonyl groups, and various decyl groups; a cycloalkyl group, such as a cyclopentyl group, a cyclohexyl group, various methylcyclohexyl groups, various ethylcyclohexyl groups, various propylcyclohexyl group, and various dimethylcyclohexyl groups; an aryl group, such as a phenyl group, various methylphenyl groups, various ethylphenyl groups, various dimethylphenyl groups, various propylphenyl groups, various trimethylphenyl groups, various butylphenyl groups, and various naphthyl groups; and an arylalkyl group, such as a benzyl group, various phenylethyl groups, various methylbenzyl groups, various phenylpropyl groups, and various phenylbutyl groups. The above-mentioned alkyl group may be linear or branched.

The number of carbon atoms of the monovalent hydrocarbon groups is preferably 1 to 10, more preferably 1 to 6, and further preferably 1 to 3, from the standpoint of the compatibility with a refrigerant.

The hydrocarbon group moiety of the acyl group having 2 to 10 carbon atoms that can be selected as R^{1b} and R^{3b} may be any of linear, branched, and cyclic. Examples of the alkyl group moiety include groups having 1 to 9 carbon atoms in the hydrocarbon groups that can be selected as R^{1b} and R^{3b}.

The number of carbon atoms of the acyl group is preferably 2 to 10, and more preferably 2 to 6, from the standpoint of the compatibility with a refrigerant.

Examples of the divalent to hexavalent hydrocarbon group that can be selected as R^{1b} include a residual group obtained by further removing 1 to 5 hydrogen atoms from the monovalent hydrocarbon group that can be selected as R^{1b}, and a residual group obtained by removing a hydroxy group from a polyhydric alcohol, such as trimethylolpropane, glycerin, pentaerythritol, sorbitol, 1,2,3-trihdyroxycyclohexane, and 1,3,5-trihydroxycyclohexane.

The number of carbon atoms of the divalent to hexavalent acyl group is preferably 2 to 10, and more preferably 2 to 6, from the standpoint of the compatibility with a refrigerant.

The heterocyclic group that can be selected as R^{1b} and R^{3b} is preferably an oxygen atom-containing heterocyclic group or a sulfur atom-containing heterocyclic group. The heterocyclic group may be a saturated ring or an unsaturated ring.

Examples of the oxygen atom-containing heterocyclic group include a residual group obtained by removing 1 to 6 hydrogen atoms from an oxygen atom-containing saturated heterocyclic ring, such as ethylene oxide, 1,3-propylene oxide, tetrahydrofuran, tetrahydropyran, and hexamethylene oxide, and an oxygen atom-containing unsaturated heterocyclic ring, such as acetylene oxide, furan, pyran, oxycycloheptatriene, isobenzofuran, and isochromene.

Examples of the sulfur atom-containing heterocyclic group include a residual group obtained by removing 1 to 6 hydrogen atoms from a sulfur atom-containing saturated heterocyclic ring, such as ethylene sulfide, trimethylene sulfide, tetrahydrothiophene, tetrahydrothiopyran, and hexamethylene sulfide, and a sulfur atom-containing unsaturated heterocyclic ring, such as acetylene sulfide, thiophene, thiopyran, and thiotripyridene.

The heterocyclic group that can be selected as R^{1b} and R^{3b} may have a substituent, and the substituent may be bonded to an oxygen atom in the general formula (B-1). The substituent may be those having been described above, and is preferably an alkyl group having 1 to 6 carbon atoms, and more preferably an alkyl group having 1 to 3 carbon atoms.

The number of ring atoms of the heterocyclic group is preferably 3 to 10, and more preferably 3 to 6, from the standpoint of the compatibility with a refrigerant.

Examples of the alkylene group that can be selected as R^{2b} include an alkylene group having 2 carbon atoms, such as a dimethylene group (-CH₂CH₂-) and an ethylene group (-CH(CH₃)-); an alkylene group having 3 carbon atoms, such as a trimethylene group (-CH₂CH₂CH₂-), a propylene group (-CH(CH₃)CH₂-), a propylidene group (-CHCH₂CH₃-), and an isopropylidene group (-C(CH₃)₂-); and an alkylene group having 4 carbon atoms, such as a tetramethylene group (-CH₂CH₂CH₂CH₂-), a 1-methyltrimethylene group (-CH(CH₃)CH₂CH₂-), a 2-methyltrimethylene group (-CH₂CH(CH₃)CH₂-), and a butylene group (-C(CH₃)₂CH₂-).

In the case where plural groups represented by R^{2b} exist, the plural groups represented by R^{2b} may be the same as each other or may be a combination of two or more kinds of alkylene groups.

Among these, R^{2b} is preferably a propylene group (-CH(CH₃)CH₂-).

In the polymer (B-1) represented by the general formula (B-1), the content of the oxypropylene unit (-OCH(CH₃)CH₂-) is preferably 50% by mol or more, more preferably 65% by mol or more, and further preferably 80% by mol or more, based on the total amount (100% by mol) of the oxyalkylene (OR^{2b}) in the polymer (B-1).

In the polymer (B-1) represented by the general formula (B-1), one or more kind selected from the group consisting of a polyoxypropylene glycol dimethyl ether represented by the following general formula (B-1-i), a polyoxyethylene polyoxypropylene glycol dimethyl ether represented by the following general formula (B-1-ii), a polyoxypropylene glycol monobutyl ether represented by the following general formula (B-1-iii), and a polyoxypropylene glycol diacetate. 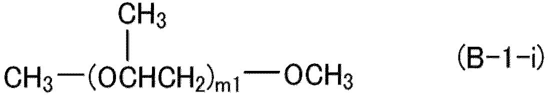 In the formula (B-1-i), m1 represents a number of 1 or more, and preferably 6 to 80. 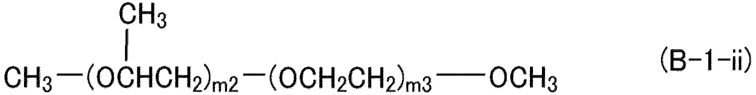 In the formula (B-1-ii), m2 and m3 each independently represent a number of 1 or more, and preferably a number that provides m2 + m3 of 6 to 80. 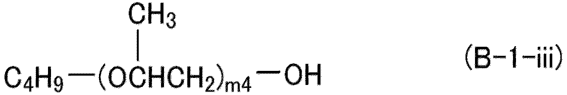 In the formula (B-1-iii), m4 represents a number of 1 or more, and preferably a number of 6 to 80.

m1 in the general formula (B-1-i), m2 and m3 in the general formula (B-1-ii), and m4 in the general formula (B-1-iii) may be appropriately selected depending on the kinetic viscosity demanded for the base oil (Y).

### <Polyol Ester Compound (POE)>

Examples of the polyol ester (POE) include an ester of a diol or a polyol and a fatty acid. In the case where base oil (Y) contains the POE, the POE may be used alone or as a combination of two or more kinds thereof.

In the POE, an ester of a diol or a polyol having 3 to 20 hydroxy groups and a fatty acid having 3 to 20 carbon atoms is preferred.

Examples of the diol include ethylene glycol, 1,3-propanediol, propylene glycol, 1,4-butanediol, 1,2-butanediol, 2-methyl-1,3-propanediol, 1,5-pentanediol, neopentyl glycol, 1,6-hexanediol, 2-ethyl-2-methyl-1,3-propanediol, 1,7-heptanediol, 2-methyl-2-propyl-1,3-propanediol, 2,2-diethyl-1,3-propanediol, 1,8-octanediol, 1,9-nonanediol, 1,10-decanediol, 1,11-undecanediol, and 1,12-dodecanediol.

Examples of the polyol include a polyhydric alcohol, such as trimethylolethane, trimethylolpropane, trimethylolbutane, di(trimethylolpropane), tri(trimethylolpropane), pentaerythritol, di(pentaerythritol), tri(pentaerythritol), glycerin, a polyglycerin (e.g., dimer to icosamer of glycerin), 1,3,5-pentanetriol, sorbitol, sorbitan, a sorbitol glycerin condensate, adonitol, arabitol, xylitol, and mannitol; a saccharide, such as xylose, arabinose, ribose, rhamnose, glucose, fructose, galactose, mannose, sorbose, cellobiose, maltose, isomaltose, trehalose, sucrose, raffinose, gentianose, and merenditose; and partially etherified products and methyl glucosides (glucosides) thereof.

Among these, a hindered alcohol, such as neopentyl glycol, trimethylolethane, trimethylolpropane, trimethylolbutane, di(trimethylolpropane), tri(trimethylolpropane), pentaerythritol, di(pentaerythritol), and tri(pentaerythritol), are preferred.

The number of carbon atoms of the fatty acid is preferably 3 or more, more preferably 4 or more, further preferably 5 or more, and still further preferably 8 or more, from the standpoint of the lubricating capability, and is preferably 20 or less, more preferably 16 or less, further preferably 12 or less, and still further preferably 10 or less, from the standpoint of the compatibility with a refrigerant.

The number of carbon atoms of the fatty acid includes the carbon atom of the carboxy group (-COOH) of the fatty acid.

The fatty acid may be any of a linear fatty acid and a branched fatty acid, and is preferably a linear fatty acid from the standpoint of the lubricating capability, and preferably a branched fatty acid from the standpoint of the hydrolysis stability. The fatty acid may also be any of a saturated fatty acid and an unsaturated fatty acid.

Examples of the fatty acid include a linear or branched fatty acid, such as isobutyric acid, propionic acid, butanoic acid, pentanoic acid, hexanoic acid, heptanoic acid, octanoic acid, nonanoic acid, decanoic acid, undecanoic acid, dodecanoic acid, tridecanoic acid, tetradecanoic acid, pentadecanoic acid, hexadecanoic acid, heptadecanoic acid, octadecanoic acid, nonadecanoic acid, icosanoic acid, and oleic acid, and a so-called neo acid having a quaternary α-carbon atom.

More specifically, isobutyric acid, valeric acid (n-pentanoic acid), caproic acid (n-hexanoic acid), enanthic acid (n-heptanoic acid), caprylic acid (n-octanoic acid), pelargonic acid (n-nonanoic acid), capric acid (n-decanoic acid), oleic acid (cis-9-octadecenoic acid), isopentanoic acid (3-methylbutanoic acid), 2-methylhexanoic acid, 2-ethylpentanoic acid, 2-ethylhexanoic acid, 3,5,5-trimethylhexanoic acid, and the like are preferred.

The POE may be a partial ester having a hydroxy group remained in which all hydroxy groups in the polyol are not completely esterified, and may be a complete ester whose hydroxy groups are completely esterified. The POE may be a mixture of a partial ester and a complete ester, and is preferably a complete ester.

The POE is preferably an ester of a hindered alcohol, such as neopentyl glycol, trimethylolethane, trimethylolpropane, trimethylolbutane, di(trimethylolpropane), tri(trimethylolpropane), pentaerythritol, di(pentaerythritol), and tri(pentaerythritol), and more preferably an ester of neopentyl glycol, trimethylolethane, trimethylolpropane, trimethylolbutane, or pentaerythritol, from the standpoint of the achievement of the excellent hydrolysis stability, and is further preferably an ester of pentaerythritol from the standpoint of the achievement of the further excellent compatibility with a refrigerant and the further excellent hydrolysis stability.

Preferred specific examples of the POE include a diester of neopentyl glycol and one kind or two or more kinds of fatty acids selected from isobutyric acid, valeric acid, caproic acid, enanthic acid, caprylic acid, pelargonic acid, capric acid, oleic acid, isopentanoic acid, 2-methylhexanoic acid, 2-ethylpentanoic acid, 2-ethylhexanoic acid, and 3,5,5-trimethylhexanoic acid; a triester of trimethylolethane and one kind or two or more kinds of fatty acids selected from isobutyric acid, valeric acid, caproic acid, enanthic acid, caprylic acid, pelargonic acid, capric acid, oleic acid, isopentanoic acid, 2-methylhexanoic acid, 2-ethylpentanoic acid, 2-ethylhexanoic acid, and 3,5,5-trimethylhexanoic acid; a triester of trimethylolpropane and one kind or two or more kinds of fatty acids selected from isobutyric acid, valeric acid, caproic acid, enanthic acid, caprylic acid, pelargonic acid, capric acid, oleic acid, isopentanoic acid, 2-methylhexanoic acid, 2-ethylpentanoic acid, 2-ethylhexanoic acid, and 3,5,5-trimethylhexanoic acid; a triester of trimethylolbutane and one kind or two or more kinds of fatty acids selected from isobutyric acid, valeric acid, caproic acid, enanthic acid, caprylic acid, pelargonic acid, capric acid, oleic acid, isopentanoic acid, 2-methylhexanoic acid, 2-ethylpentanoic acid, 2-ethylhexanoic acid, and 3,5,5-trimethylhexanoic acid; and a tetraester of pentaerythritol and one kind or two or more kinds of fatty acids selected from isobutyric acid, valeric acid, caproic acid, enanthic acid, caprylic acid, pelargonic acid, capric acid, oleic acid, isopentanoic acid, 2-methylhexanoic acid, 2-ethylpentanoic acid, 2-ethylhexanoic acid, and 3,5,5-trimethylhexanoic acid.

The ester of two or more kinds of fatty acids may be a mixture of two or more kinds of esters of one kind of a fatty acid and a polyol. The POE is preferably an ester of a mixed fatty acid of two or more kinds thereof and a polyol from the standpoint of the compatibility with a refrigerant.

### <Mineral Oil>

Examples of the mineral oil include a paraffin based crude oil, an intermediate crude oil, an oil that is obtained in such a manner that a naphthene based crude oil is subjected to atmospheric distillation, or the crude oil is subjected to atmospheric distillation to provide an atmospheric residual oil, which is subjected to distillation under reduced pressure to provide a lubricating oil fraction, which is subjected one or more treatment of solvent deasphalting, solvent extraction, hydrocracking, solvent dewaxing, catalytic dewaxing, hydrorefining, and the like, an oil that is produced through isomerization of mineral oil based wax, and an oil produced through isomerization of GTL WAX (gas-to-liquid wax) produced by the Fischer-Tropsch process.

In the case where the base oil (Y) contains a mineral oil, the mineral oil may be used alone or as a combination of two or more kinds thereof.

In the refrigerator oil composition of one embodiment of the present invention, one or more kind of the base oil (Y1) selected from a polyvinyl ether compound (PVE), a polyalkylene glycol compound (PAG), a polyol ester compound (POE), and a mineral oil is a major component of the base oil (Y). Preferably, one or more kind of a base oil (Y2) selected from a polyvinyl ether compound (PVE) and a polyalkylene glycol compound (PAG) is a major component of the base oil (Y). More preferably, a polyalkylene glycol compound (PAG) (Y3) is a major component of the base oil (Y).

The content of the base oil (Y1), the base oil (Y2), or the base oil (Y3) in the base oil (Y) is preferably 50 to 100% by mass or more, more preferably 60 to 100% by mass or more, further preferably 70 to 100% by mass or more, still further preferably 80 to 100% by mass or more, and still more further preferably 90 to 100% by mass, based on the total amount (100% by mass) of the base oil (Y).

In the refrigerator oil composition of one embodiment of the present invention, the content of the base oil (Y1), the base oil (Y2), or the base oil (Y3) is 100% by mass based on the total amount (100% by mass) of the base oil (Y).

The base oil (Y) may further contain an additional base oil, in addition to the base oil (Y1), the base oil (Y2), or the base oil (Y3), in such a range that does not impair the effects of the present invention.

Examples of the additional base oil include synthetic oils, such as a polyester compound, a polycarbonate compound, a hydrogenated product of an α-olefin oligomer, an alicyclic hydrocarbon compound, an alkylated aromatic hydrocarbon compound, and a copolymer of a poly(oxy)alkylene glycol or a monoether thereof and a polyvinyl ether (ECP), that do not correspond to the PVE, the PAG, and the POE described above.

The "copolymer of a poly(oxy)alkylene glycol or a monoether thereof and a polyvinyl ether (ECP)" herein is a copolymer having a constitutional unit derived from a poly(oxy)alkylene glycol or a monoether thereof and a constitutional unit derived from a polyvinyl ether, and the "poly(oxy)alkylene glycol" means both a polyalkylene glycol and a polyoxyalkylene glycol.

The base oil (Y) preferably has a 40°C kinetic viscosity of 5 to 150 mm²/s. In the case where the 40°C kinetic viscosity is 5 mm²/s, a favorable lubricating capability may be exhibited, and simultaneously a good sealing capability may be obtained. In the case where the 40°C kinetic viscosity is 150 mm²/s or less, the base oil may be excellent in compatibility with a refrigerant, providing a favorable energy saving capability. From these standpoints, the 40°C kinetic viscosity of the base oil (Y) is more preferably 10 to 120 mm²/s, and further preferably 20 to 100 mm²/s.

### [Additives]

The refrigerator oil composition of the present invention may further contain a general additive in such a range that does not impair the effects of the present invention.

As the additive, one or more kind of an additive selected from an antioxidant, an oiliness improver, an oxygen scavenger, an extreme pressure agent, a copper deactivator, a rust inhibitor, an anti-foaming agent, and a viscosity index improver is preferably contained, and at least an antioxidant and an extreme pressure agent are more preferably contained, from the standpoint of the enhancement of the stability of the refrigerator oil composition.

The content of the additives is preferably 0 to 10% by mass, more preferably 0.01 to 5% by mass, and further preferably 0.1 to 3% by mass, based on the total amount (100% by mass) of the refrigerator oil composition.

### <Antioxidant>

The antioxidant is preferably one or more kind selected from a phenol-based antioxidant and an amine based antioxidant.

Examples of the phenol-based antioxidant include 2,6-di-tert-butyl-4-methylphenol (DBPC), 2,6-di-tert-butyl-4-ethylphenol, and 2,2'-methylenebis(4-methyl-6-tert-butylphenol).

Examples of the amine based antioxidant include phenyl-α-naphthylamine and N,N'-diphenyl-p-phenylenediamine.

Among these, 2,6-di-tert-butyl-4-methylphenol (DBPC) is more preferred.

The content of the antioxidant is preferably 0.01 to 5% by mass, and more preferably 0.05 to 3% by mass, based on the total amount (100% by mass) of the refrigerator oil composition, from the standpoint of the stability and the antioxidant capability.

### <Oiliness Improver>

Examples of the oiliness improver include an aliphatic saturated or unsaturated monocarboxylic acid, such as stearic acid and oleic acid; a polymerized fatty acid, such as a dimer acid and a hydrogenated dimer acid; a hydroxyfatty acid, such as ricinoleic acid and 12-hydroxystearic acid; an aliphatic saturated or unsaturated monohydric alcohol, such as lauryl alcohol and oleyl alcohol; an aliphatic saturated or unsaturated monoamine, such as stearylamine and oleylamine; an aliphatic saturated or unsaturated monocarboxylic acid amide, such as lauric acid amide and oleic acid amide; and a partial ester of a polyhydric alcohol, such as glycerin and sorbitol, and an aliphatic saturated or unsaturated monocarboxylic acid.

### <Oxygen Scavenger>

Examples of the oxygen scavenger include an aliphatic unsaturated compound and a terpene compound having a double bond.

The aliphatic unsaturated compound is preferably an unsaturated hydrocarbon, and specific examples thereof include an olefin and a polyene, such as a diene and a triene. The olefin is preferably an α-olefin, such as 1-tetradecene, 1-hexadecene, and 1-octadecene, from the standpoint of the high reactivity with oxygen thereof.

Examples of the aliphatic unsaturated compound other than the above include an unsaturated aliphatic alcohol having a conjugated double bonds, such as vitamin A represented by the molecular formula C₂₀H₃₀O ((2E,4E,6E,8E)-3,7-dimethyl-9-(2,6,6-trimethylcyclohexen- 1-yl)nona-2,4,6,8-tetraene-1-ol), from the standpoint of the high reactivity with oxygen thereof.

The terpene compound having a double bond is preferably a terpene based hydrocarbon having a double bond, and α-farnesene (C₁₅H₂₄: 3,7,11-trimethyldodeca-1,3,6,10-tetraene) and β-farnesene (C₁₅H₂₄: 7,11-dimethyl-3-methylidenedodeca-1,6,10-triene) are preferred from the standpoint of the high reactivity with oxygen thereof.

### <Extreme Pressure Agent>

The extreme pressure agent is preferably a phosphorus based extreme pressure agent, a metal salt of a carboxylic acid, and a sulfur based extreme pressure agent.

Examples of the phosphorus based extreme pressure agent include a phosphate ester, an acidic phosphate ester, a phosphite ester, an acidic phosphite ester, and amine salts thereof.

Among these, one or more kind selected from tricresyl phosphate (TCP), trithiophenyl phosphate, tri(nonylphenyl) phosphite, dioleyl hydrogen phosphite, and 2-ethylhexyl diphenyl phosphite is preferred, and tricresyl phosphate (TCP) is more preferred, from the standpoint of the enhancement of the extreme pressure capability and the frictional characteristics.

Examples of the metal salt of a carboxylic acid include a metal salt of a carboxylic acid having 3 to 60 (preferably 3 to 30) carbon atoms.

Among these, one or more kind selected from a metal salt of a fatty acid having 12 to 30 carbon atoms or a dicarboxylic acid having 3 to 30 carbon atoms is preferred.

The metal constituting the metal salt is preferably an alkali metal or an alkaline earth metal, and more preferably an alkali metal.

Examples of the sulfur based extreme pressure agent include sulfurized fat and oil, a sulfurized fatty acid, a sulfurized ester, a sulfurized olefin, dihydrocarbyl polysulfide, a thiocarbamate compound, a thioterpene compound, and a dialkyl thiodipropionate compound.

The content of the extreme pressure agent is preferably 0.001 to 5% by mass, and more preferably 0.005 to 3% by mass, based on the total amount (100% by mass) of the refrigerator oil composition, from the standpoint of the lubricating capability and the stability.

### <Copper Deactivator>

Examples of the copper deactivator include N-[N,N'-dialkyl (e.g., an alkyl group having 3 to 12 carbon atoms) aminomethyl]triazole.

### <Rust Inhibitor>

Examples of the rust inhibitor include a metal sulfonate, an aliphatic amine compound, an organic phosphite ester, an organic phosphate ester, an organic metal sulfonate salt, an organic metal phosphate salt, an alkenylsuccinate ester, and a polyhydric alcohol ester.

### <Anti-foaming Agent>

Examples of the anti-foaming agent include a silicone based anti-foaming agent, such as a silicone oil and a fluorinated silicone oil.

### <Viscosity Index Improver>

Examples of the viscosity index improver include a polymethacrylate, a polyisobutylene, an ethylene-propylene copolymer, and a styrene-dine hydrogenated copolymer.

### [Properties of Refrigerator Oil Composition of Present Invention]

The refrigerator oil composition of one embodiment of the present invention may have a water content of 800 ppm by mass or less, preferably 700 ppm by mass or less, more preferably 500 ppm by mass or less, further preferably 300 ppm by mass or less (preferably less than 300 ppm by mass), still further preferably 200 ppm by mass or less, and still more further preferably 100 ppm by mass or less.

Even in the case where the refrigerator oil composition of the present invention has a sufficiently low water content, the excellent effect of suppressing the increase of the acid value can be exhibited, and therefore it is not necessary to contain water in a certain amount or more for suppressing the increase of the acid value. In the refrigerator oil composition of one embodiment of the present invention, the lower limit of the water content is not particularly limited, and is preferably 50 ppm by mass or more.

### [Refrigerant]

The refrigerator oil composition of the present invention is mixed with a refrigerant and used as a refrigerant-mixed refrigerator oil composition.

Examples of the refrigerant include one or more kind selected from the group consisting of a fluorinated hydrocarbon and a natural refrigerant, such as a hydrocarbon (HC) based refrigerant, carbon dioxide, and ammonia and the refrigerant includes an unsaturated fluorinated hydrocarbon.

In the refrigerant-mixed refrigerator oil composition, the amounts of the refrigerant and the refrigerator oil composition used are preferably 1/99 or more and 90/10 or less, and more preferably 5/95 or more and 70/30 or less, in terms of mass ratio (refrigerator oil composition)/(refrigerant). In the case where the mass ratio (refrigerator oil composition)/(refrigerant) is in the range, a lubricating capability and a favorable refrigeration capability in a refrigerator can be obtained.

### <Fluorinated Hydrocarbon Refrigerant>

Examples of the fluorinated hydrocarbon refrigerant include a saturated fluorinated hydrocarbon compound (HFC) and an unsaturated fluorinated hydrocarbon compound (HFO).

An unsaturated fluorinated hydrocarbon compound has low thermal stability at a high temperature, and thus has a defect that the use thereof as a refrigerant may generate an acidic substance, such as a hydrogen fluoride (HF), so as to cause the tendency of increase the acid value, but the use of the refrigerator oil composition of the present invention can solve the defect of the unsaturated fluorinated hydrocarbon compound, i.e., the tendency of increase of the acid value, and thereby the stability of a refrigeration system and the like using the unsaturated fluorinated hydrocarbon compound as a refrigerant can be secured.

Accordingly, in the refrigerator oil composition the refrigerant is a refrigerant containing an unsaturated fluorinated hydrocarbon compound (HFO), and preferably a refrigerant formed only of an unsaturated fluorinated hydrocarbon compound (HFO).

Examples of the unsaturated fluorinated hydrocarbon compound include compounds having a carbon-carbon double bond, such as fluorinated compounds of a linear or branched chain-like olefin having 2 or more and 6 or less carbon atoms and a cyclic olefin having 4 or more and 6 or less carbon atoms.

More specific examples thereof include ethylene having 1 or more and 3 or less fluorine atoms introduced thereto, propene having 1 or more and 5 or less fluorine atoms introduced thereto, butene having 1 or more and 7 or less fluorine atoms introduced thereto, pentene having 1 or more and 9 or less fluorine atoms introduced thereto, hexene having 1 or more and 11 or less fluorine atoms introduced thereto, cyclobutene having 1 or more and 5 or less fluorine atoms introduced thereto, cyclopentene having 1 or more and 7 or less fluorine atoms introduced thereto, and cyclohexene having 1 or more and 9 or less fluorine atoms introduced thereto.

Among the unsaturated fluorinated hydrocarbon compounds, a fluorinated compound of propene is preferred, propene having 3 or more and 5 or less fluorine atoms introduced thereto is more preferred, and propene having 4 fluorine atoms introduced thereto is further preferred. Examples of the preferred compound include 1,3,3,3-tetrafluoropropene (R1234ze) and 2,3,3,3-tetrafluoropropene (R1234yf).

The unsaturated fluorinated hydrocarbon compound may be used alone or as a combination of two or more kinds thereof, and may be used in combination with a refrigerator other than the unsaturated fluorinated hydrocarbon compound. Examples of the case using in combination with a refrigerator other than the unsaturated fluorinated hydrocarbon compound include a mixed refrigerant of a saturated fluorinated hydrocarbon compound and the unsaturated fluorinated hydrocarbon compound. Examples of the mixed refrigerant include a mixed refrigerant of R32 and R1234yf and a mixed refrigerant of R32, R1234ze, and R152a (AC5, mixing ratio: 13.23/76.20/9.96).

The saturated fluorinated hydrocarbon compound is preferably a fluorinated compound of an alkane having 1 or more and 4 or less carbon atoms, more preferably a fluorinated compound of an alkane having 1 or more and 3 or less carbon atoms, and further preferably a fluorinated compound of an alkane having 1 or 2 carbon atoms (i.e., methane or ethane). Examples of the fluorinated compound of methane or ethane include trifluoromethane (R23), difluoromethane (R32), 1,1-difluoroethane (R152a), 1,1,1-trifluoroethane (R143a), 1,1,2-trifluoroethane (R143), 1,1,1,2-tetrafluoroethane (R134a), 1,1,2,2-tetrafluoroethane (R134), and 1,1,1,2,2-pentafluoroethane (R125), and among these, difluoromethane and 1,1,1,2,2-pentafluoroethane are preferred.

### <Natural Refrigerant>

Examples of the natural refrigerant include one or more kind selected from the group consisting of a hydrocarbon (HC), carbon dioxide (CO₂), and ammonia, and a hydrocarbon (HC) based refrigerant is preferred. These materials may be used in combination with a refrigerant other than the natural refrigerant. Examples of the case using in combination with a refrigerator other than the natural refrigerant include a mixed refrigerant with a unsaturated fluorinated hydrocarbon compound and optionally aditionally a saturated fluorinated hydrocarbon compound. Specific examples of the mixed refrigerant include a mixed refrigerant of carbon dioxide, R1234ze, and R134a (AC6, mixing ratio: 5.15/79.02/15.41).

The hydrocarbon (HC) based refrigerant is preferably a hydrocarbon having 1 or more and 8 or less carbon atoms, more preferably a hydrocarbon having 1 or more and 5 or less carbon atoms, and further preferably a hydrocarbon having 3 or more and 5 or less carbon atoms. The number of carbon atoms of 8 or less is preferred as a refrigerant since the refrigerant may not have a too high boiling point. Examples of the hydrocarbon based refrigerant include one or more kind selected from the group consisting of methane, ethane, ethylene, propane (R290), cyclopropane, propylene, n-butane, isobutane (R600a), 2-methylbutane, n-pentane, isopentane, cyclopentane, isobutane, and n-butane.

### [Refrigerator]

The refrigerator oil composition of the present invention may be used after charging inside a refrigerator along with a refrigerant. The refrigerator herein has a refrigeration cycle constituted by a compressor, a condenser, an expansion mechanism (such as an expansion valve), and an evaporator, or by a compressor, a condenser, an expansion mechanism, a dryer, and an evaporator, as the essential components. The refrigerator oil composition of the present invention is used, for example, for lubricating a sliding part provided in the compressor or the like.

Accordingly, the present invention also provides a lubricating method including using the refrigerator oil composition of the present invention in a lubricating part inside a refrigerator.

The refrigerator oil composition of the present invention can also be used, for example, in an air-conditioning machine, a refrigerating chamber, an automatic vending machine, a showcase, a refrigeration system, a hot water supplying system, and a heating system.

Examples of the air-conditioning machine include an automobile air conditioner, such as an open type automobile air conditioner and an electric automobile air conditioner, and a gas heat pump (GHP) air conditioner.

### Examples

The present invention will be described in more detail with reference to examples below, but the present invention is not limited to the examples.

The components used for the preparation of refrigerator oil compositions of Examples and Comparative Examples are shown below.

### (1) Base Oil

Any one of a polyvinyl ether compound (PVE) having a 40°C kinetic viscosity of 72.0 mm²/s and a polyalkylene glycol compound (PAG) having a 40°C kinetic viscosity of 47.0 mm²/s was used as the base oil.

The 40°C kinetic viscosity was measured according to JIS K2283:2000 with a glass capillary viscometer.

### (2) Antioxidant

2,6-Di-tert-butyl-4-methylphenol (DBPC) was used.

### (3) Extreme Pressure Agent

Tricresyl phosphate (TCP) was used.

### (4) Stabilizer

Any of the following compounds was used.
β-pinene
1-hexadecene
2-ethylhexyl glycidyl ether
allyl glycidyl ether
1,2-epoxy-4-vinylcyclohexane
α-pinene oxide

### (5) Refrigerant

2,3,3,3-Tetrafluoropropene (R1234yf) was used alone or as a combination with difluoromethane (R32).

### [Examples 1 to 13 and Comparative Examples 1 to 4]

Refrigerator oil compositions having the compositions shown in Tables 1 and 2 were prepared and mixed with the refrigerants having the compositions shown in Tables 1 and 2, and then the refrigerant-mixed refrigerator oil compositions each were subjected to an autoclave test according to the following methods. The acid values of the refrigerant-mixed refrigerator oil compositions after the autoclave test are shown in Tables 1 and 2.

The unit of the numerals in Tables 1 and 2 except for the evaluation item (i.e., the acid value after test) is "% by mass".

### <Autoclave Test>

Fe, Cu, and Al as a catalyst were placed in an autoclave container (capacity: 200 mL), to which a mixture of 30 g of the refrigerator oil composition of Examples 1 to 13 and Comparative Examples 1 to 4 and 30 g of the refrigerant was charged, and 500 ppm by mass of water and 25 mL of air were charged, followed by retaining the autoclave at 175°C for 14 days, and then the acid value (mgKOH/g) was evaluated.

The acid value was measured according to JIS K2501 by the indicator luminosity titration method (see Appendix 1 of the JIS document).

The case where the acid value after the test was 0.8 mgKOH/g or less was judged as effective for suppressing increase of the acid value.
*examples labelled with an asterisk are reference examples.

**Table 1**

| | | Blend | Structural formula | Example 1* | Example 2 | Example 8 | Example 4 | Example 5 | Example 6 | Example 7 | Example 8 | Example 9 | Example 10 | Example 11 | Example 12* | Example 18 |
|---|---|---|---|---|---|---|---|---|---|---|---|---|---|---|---|---|
| Test refrigerant | | R1284yf | - | 100.0 | 100.0 | 100.0 | 100.0 | 100.0 | 100.0 | 100.0 | 100.0 | 100.0 | 100.0 | 100.0 | 100.0 | 65.0 |
| | | R82 | - | - | - | - | - | - | - | - | - | - | - | - | - | 85.0 |
| Base oil | | PVE | - | 96.7 | 98.4 | 98.2 | 97.7 | 97.5 | 97.1 | 96.7 | 98.7 | - | - | - | 96.7 | 96.7 |
| | | PAG | - | - | - | - | - | - | - | - | - | 97.7 | 96.7 | 95.7 | - | - |
| Antioxidant | | DBPC | - | 0.8 | 0.8 | 0.8 | 0.8 | 0.8 | 0.8 | 0.8 | 0.8 | 0.8 | 0.8 | 0.8 | 0.8 | 0.8 |
| Extreme pressure agent | | TCP | - | 1.0 | 1.0 | 1.0 | 1.0 | 1.0 | 1.0 | 1.0 | 1.0 | 1.0 | 1.0 | 1.0 | 1.0 | 1.0 |
| Stabilizer | Terpene based compound | β-pinene | 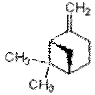 | - | - | - | - | - | - | - | - | - | - | - | - | - |
| | Olefin based compound | 1-hexadecene | CH₃(CH₂)₁₃CH=CH₂ | - | - | - | - | - | - | - | - | - | - | - | - | - |
| | Epoxy compound having no olefin skeleton or terpene skeleton | 2-ethylhexyl glycidyl ether | 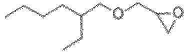 | - | - | - | - | - | - | - | - | - | - | - | - | - |
| | Epoxy compound having olefin skeleton (X1) | allyl glycidyl ether | 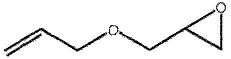 | 2.0 | | - | - | - | - | - | - | - | - | - | - | - |
| | | 1,2-epoxy-4-vinylcyclohexane | 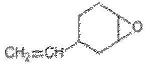 | - | 0.8 | 0.5 | 1.0 | 1.2 | 1.8 | 2.0 | 5.0 | 1.0 | 2.0 | 8.0 | - | 2.0 |
| | Epoxy compound having terpene skeleton (X2) | α-pinene oxide | 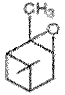 | - | - | - | - | - | - | - | - | - | - | - | 2.0 | - |
| Evaluation item | | Acid value after test (mgKOH/g) | | 0.06 | 0.74 | 0.82 | 0.18 | 0.09 | 0.05 | 0.05 | 0.05 | 0.11 | 0.04 | 0.02 | 0.06 | 0.05 |

| | | | | | | | | | | | | | | | | |
|---|---|---|---|---|---|---|---|---|---|---|---|---|---|---|---|---|
| unit: % by weight | | | | | | | | | | | | | | | | |

**Table 2**

| | | Blend | Structural formula | Comparative Example 1 | Comparative Example 2 | Comparative Example 3 | Comparative Example 4 |
|---|---|---|---|---|---|---|---|
| Test refrigerant | | R1234yf | - | 100.0 | 100.0 | 100.0 | 100.0 |
| | | R32 | - | - | - | - | - |
| Base oil | | PVE | - | 98.7 | 98.2 | 98.2 | 98.2 |
| | | PAG | - | | - | | - |
| Antioxidant | | DBPC | - | 0.8 | 0.8 | 0.8 | 0.8 |
| Extreme pressure agent | | TCP | - | 1.0 | 1.0 | 1.0 | 1.0 |
| Stabilizer | Terpene based compound | β-pinene | 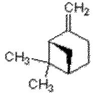 | - | 0.5 | - | - |
| | Olefin based compound | 1-hexadecene | CH₃(CH₂)₁₃CH=CH₂ | - | - | 0.5 | - |
| | Epoxy compound having no olefin skeleton or terpene skeleton | 2-ethylhexyl glycidyl ether | 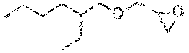 | - | - | - | 0.5 |
| | Epoxy compound having olefin skeleton (X1) | allyl glycidyl ether | 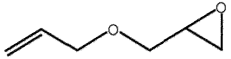 | - | - | - | - |
| | | 1,2-epoxy-4-vinyl-cyclohexane | 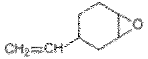 | - | - | - | - |
| | Epoxy compound having terpene skeleton (X2) | α-pinene oxide | 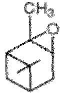 | - | - | - | - |
| Evaluation item | | Acid value after test (mgKOH/g) | | 1.24 | 1.01 | 1.82 | 0.96 |

| | | | | | | | |
|---|---|---|---|---|---|---|---|
| unit: % by weight | | | | | | | |

It is understood that Tables 1 and 2 show as follows.

It is understood from Examples 1 to 11 and 13 in Table 1 that the use of allyl glycidyl ether, which is an aliphatic epoxy compound having an olefin skeleton, or 1,2-epoxy-4-vinylcyclohexane, which is an alicyclic epoxy compound having an olefin skeleton, suppresses increase of the acid value.

It is also understood from Example 12 in Table 1 that the use of α-pinene oxide, which is an alicyclic epoxy compound having a terpene skeleton, suppresses increase of the acid value.

It is understood from the above that the use of any of the epoxy compound (X1) having an olefin skeleton and the epoxy compound (X2) having a terpene skeleton suppresses increase of the acid value.

On the other hand, it is understood from Comparative Examples 1 to 4 in Table 2 that the acid value is largely increased in the case where no stabilizer is used, and in the case where β-pinene, which is a terpene based compound, 1-hexadecene, which is an olefin based compound, or 2-ethylhexyl glycidyl ether, which is an epoxy compound having no olefin skeleton or terpene skeleton, is used.

### Industrial Applicability

The refrigerator oil composition of the present invention is favorably used, for example, in a refrigerator using one or more kind of a refrigerant selected from an unsaturated fluorinated hydrocarbon compound, a saturated fluorinated hydrocarbon compound, a hydrocarbon, carbon dioxide, and ammonia.

## Claims

1. A refrigerant-mixed refrigerator oil composition comprising:
(i) a refrigerator oil composition comprising: an epoxy compound (X) having at least an olefin skeleton and optionally a terpene skeleton, and a base oil (Y), and
(ii) a refrigerant comprising an unsaturated fluorinated hydrocarbon compound,
wherein the epoxy compound (X) contains an alicyclic epoxy compound (X1A) having at least an olefin skeleton and optionally a terpene skeleton,
wherein the alicyclic epoxy compound (X1A) having at least an olefin skeleton is represented by the general formula (1), 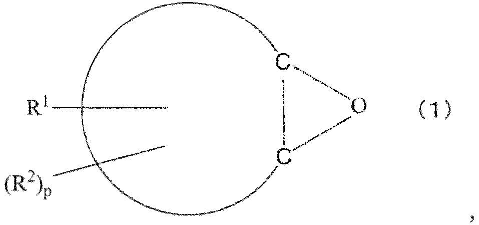
wherein in the general formula (1), the alicyclic ring shown by the approximate circle is a cycloalkane skeleton having 5 to 12 ring carbon atoms or a cycloalkene skeleton having 5 to 12 ring carbon atoms, R¹ represents an aliphatic hydrocarbon group having a linear or branched olefin structure having 2 to 10 carbon atoms, R² represents any of an alkyl group having 1 to 3 carbon atoms, a halogen atom, a hydroxy group, an alkoxy group, an amino group, an imino group, an amide group, and a carboxy group, and p represents an integer of 0 or more.

2. The refrigerant-mixed refrigerator oil composition according to claim 1, wherein the epoxy compound (X) has a number of carbon atoms of 4 to 16.

3. The refrigerant-mixed refrigerator oil composition according to claim 1 or 2, wherein the refrigerator oil composition has a content of the epoxy compound (X) of 0.3 to 5.0% by mass based on the total amount of the refrigerator oil composition.

4. The refrigerant-mixed refrigerator oil composition according to any one of claims 1 to 3, wherein the base oil (Y) contains one or more kind selected from a polyvinyl ether compound (PVE), a polyalkylene glycol compound (PAG), a polyol ester compound (POE), and a mineral oil.

5. The refrigerant-mixed refrigerator oil composition according to any one of claims 1 to 4, wherein the refrigerator oil composition further comprises one or more kind of an additive selected from an antioxidant, an oiliness improver, an oxygen scavenger, an extreme pressure agent, a copper deactivator, a rust inhibitor, an anti-foaming agent, and a viscosity index improver.

6. The refrigerant-mixed refrigerator oil composition according to any one of claims 1 to 5, wherein the refrigerator oil composition has a water content of 800 ppm by mass or less.

7. Use of the refrigerant-mixed refrigerator oil composition as defined in any one of claims 1 to 6 in an air-conditioning machine, a refrigerating chamber, an automatic vending machine, a showcase, a refrigeration system, a hot water supplying system, and a heating system.

## Patentansprüche

1. Mit Kältemittel gemischte Kältemaschinenölzusammensetzung, umfassend:
(i) eine Kältemaschinenölzusammensetzung, umfassend: eine Epoxyverbindung (X), die mindestens ein Olefingerüst und gegebenenfalls ein Terpengerüst aufweist, und ein Basisöl (Y), und
(ii) ein Kältemittel, umfassend eine ungesättigte fluorierte Kohlenwasserstoffverbindung,
worin die Epoxyverbindung (X) eine alicyclische Epoxyverbindung (X1A) enthält, die mindestens ein Olefingerüst und gegenbenenfalls ein Terpengerüst aufweist,
worin die alicyclische Epoxyverbindung (X1a), die mindestens ein Olefingerüst aufweist, durch die allgemeine Formel (1) dargestellt ist, 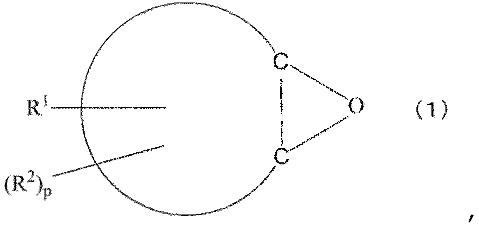
worin, in der allgemeinen Formel (1), der durch den ungefähren Kreis dargestellte alicyclische Ring ein Cycloalkangerüst mit 5 bis 12 Ringkohlenstoffatomen oder ein Cycloalkengerüst mit 5 bis 12 Ringkohlenstoffatomen ist, R¹ eine aliphatische Kohlenwasserstoffgruppe mit einer linearen oder verzweigten Olefinstruktur mit 2 bis 10 Kohlenstoffatomen darstellt, R² eines aus einer Alkylgruppe mit 1 bis 3 Kohlenstoffatomen, einem Halogenatom, einer Hydroxygruppe, einer Alkoxygruppe, einer Aminogruppe, einer Iminogruppe, einer Amidgruppe und einer Carboxygruppe darstellt und p eine ganze Zahl von 0 oder mehr ist.

2. Mit Kältemittel gemischte Kältemaschinenölzusammensetzung gemäß Anspruch 1, worin die Epoxyverbindung (X) eine Anzahl an Kohlenstoffatomen von 4 bis 16 aufweist.

3. Mit Kältemittel gemischte Kältemaschinenölzusammensetzung gemäß Anspruch 1 oder 2, worin die Kältemaschinenölzusammensetzung einen Gehalt der Epoxyverbindung (X) von 0,3 bis 5,0 Massen-%, bezogen auf die Gesamtmenge der Kältemaschinenölzusammensetzung, aufweist.

4. Mit Kältemittel gemischte Kältemaschinenölzusammensetzung gemäß einem der Ansprüche 1 bis 3, worin das Basisöl (Y) eines oder mehrere enthält, ausgewählt aus einer Polyvinyletherverbindung (PVE), einer Polyalkylenglykolverbindung (PAG), einer Polyolesterverbindung (POE) und einem Mineralöl.

5. Mit Kältemittel gemischte Kältemaschinenölzusammensetzung gemäß einem der Ansprüche 1 bis 4, worin die Kältemaschinenölzusammensetzung ferner eine oder mehrere Arten eines Additivs umfasst, ausgewählt aus einem Antioxidans, einem Öligkeitsverbesserer, einem Sauerstofffänger, einem Hochdruckmittel, einem Kupferdeaktivator, einem Rostschutzmittel, einem Antischaummittel und einem Viskositätsindexverbesserer.

6. Mit Kältemittel gemischte Kältemaschinenölzusammensetzung gemäß einem der Ansprüche 1 bis 5, worin die Kältemaschinenölzusammensetzung einen Wassergehalt von 800 ppm oder weniger aufweist.

7. Verwendung der wie in einem der Ansprüche 1-6 definierten mit Kältemittel gemischten Kältemaschinenölzusammensetzung in einer Klimaanlage, einer Kühlkammer, einem Verkaufsautomaten, einer Vitrine, einem Kühlsystem, einem Warmwasserversorgungssystem und einem Heizsystem.

## Revendications

1. Composition d'huile pour réfrigérateur mélangée à un fluide frigorigène comprenant :
(i) une composition d'huile pour réfrigérateur comprenant : un composé époxy (X) présentant au moins un squelette d'oléfine et facultativement un squelette de terpène, et une huile de base (Y), et
(ii) un fluide frigorigène comprenant un composé hydrocarboné fluoré insaturé,
dans laquelle le composé époxy (X) contient un composé époxy alicyclique (X1A) présentant au moins un squelette d'oléfine et facultativement un squelette de terpène,
dans laquelle le composé époxy alicyclique (X1A) présentant au moins un squelette d'oléfine est représenté par la formule générale (1), 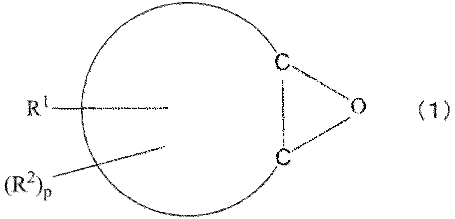
dans laquelle dans la formule générale (1), le cycle alicyclique montré par le cercle approximatif est un squelette de cycloalcane présentant 5 à 12 atomes de carbone de cycle ou un squelette de cycloalcène présentant 5 à 12 atomes de carbone de cycle, R¹ représente un groupe hydrocarboné aliphatique présentant une structure d'oléfine linéaire ou ramifiée présentant 2 à 10 atomes de carbone, R² représente l'un quelconque d'un groupe alkyle présentant 1 à 3 atomes de carbone, d'un atome d'halogène, d'un groupe hydroxy, d'un groupe alcoxy, d'un groupe amino, d'un groupe imino, d'un groupe amide et d'un groupe carboxy, et p représente un nombre entier de 0 ou plus.

2. Composition d'huile pour réfrigérateur mélangée à un fluide frigorigène selon la revendication 1, dans laquelle le composé époxy (X) présente un nombre d'atomes de carbone de 4 à 16.

3. Composition d'huile pour réfrigérateur mélangée à un fluide frigorigène selon la revendication 1 ou la revendication 2, dans laquelle la composition d'huile pour réfrigérateur présente une teneur du composé époxy (X) de 0,3 à 5,0 % en masse sur la base de la quantité totale de la composition d'huile pour réfrigérateur.

4. Composition d'huile pour réfrigérateur mélangée à un fluide frigorigène selon l'une quelconque des revendications 1 à 3, dans laquelle l'huile de base (Y) contient un ou plusieurs types sélectionnés parmi un composé éther polyvinylique (PVE), un composé polyalkylène glycol (PAG), un composé ester de polyol (POE), et une huile minérale.

5. Composition d'huile pour réfrigérateur mélangée à un fluide frigorigène selon l'une quelconque des revendications 1 à 4, dans laquelle la composition d'huile pour réfrigérateur comprend en outre un ou plusieurs types d'un additif sélectionné parmi un antioxydant, un améliorant d'onctuosité, un absorbeur d'oxygène, un agent extrême-pression, un désactivateur de cuivre, un inhibiteur de rouille, un agent antimousse et un améliorant d'indice de viscosité.

6. Composition d'huile pour réfrigérateur mélangée à un fluide frigorigène selon l'une quelconque des revendications 1 à 5, dans laquelle la composition d'huile pour réfrigérateur présente une teneur en eau de 800 ppm en masse ou moins.

7. Utilisation de la composition d'huile pour réfrigérateur mélangée à un fluide frigorigène selon l'une quelconque des revendications 1 à 6 dans une machine de climatisation, une chambre de réfrigération, un distributeur automatique, une vitrine, un système de réfrigération, un système d'alimentation en eau chaude et un système de chauffage.
